# EUROPÄISCHE PATENTSCHRIFT

(11) **EP 3 053 897 B1**
(45) Veröffentlichungstag und Bekanntmachung des Hinweises auf die Patenterteilung: **01.02.2017**
(21) Anmeldenummer: 15154358.4
(22) Anmeldetag: 09.02.2015
(51) Int. Cl.: C04B 35/107, C04B 35/109

(54) **Versatz zur Herstellung eines feuerfesten Erzeugnisses, ein Verfahren zur Herstellung eines feuerfesten Erzeugnisses, ein feuerfestes Erzeugnis sowie die Verwendung eines feuerfesten Erzeugnisses**
Formulation and process for the manufacture of a refractory product, a refractory product and the use therof
Composition et procédé de production d'un produit réfractaire, ledit produit et son utilisation

(43) Veröffentlichungstag der Anmeldung: 10.08.2016
(73) Patentinhaber: Refractory Intellectual Property GmbH & Co. KG, 1100 Wien (AT)
(72) Erfinder: Djuricic, Boro, 8700 Leoben (AT); Freiberger, Norbert, 8054 Graz (AT); Mühlhäusser, Jürgen, 8700 Leoben (AT); Bauer, Christoph, 8010 Graz (AT)
(74) Vertreter: Berkenbrink, Kai-Oliver

(56) Entgegenhaltungen:
- EP-A1- 2 221 286
- EP-A2- 0 323 010
- CA-A1- 1 129 441
- DE-A1- 3 408 952
- DE-A1- 3 628 055
- JP-A- H02 285 014
- US-A- 4 210 454
- US-A- 4 775 504
- VYATKINA N A ET AL: "Oxide-based carbon slide gate plates", REFRACTORIES AND INDUSTRIAL CERAMICS, KLUWER ACADEMIC PUBLISHERS-CONSULTANTS BUREAU, NE, Bd. 47, Nr. 1, 1. Januar 2006 (2006-01-01) , Seiten 19-20, XP019406466, ISSN: 1573-9139, DOI: 10.1007/S11148-006-0046-5
- DATABASE WPI Week 201280 Thomson Scientific, London, GB; AN 2012-N54956 XP002736903, -& CN 102 603 334 A (UNIV WUHAN SCI & TECHNOLOGY) 25. Juli 2012 (2012-07-25)
- DATABASE WPI Week 200736 Thomson Scientific, London, GB; AN 2007-377436 XP002736904, -& CN 1 884 203 A (ANSHAN CHOSUN REFRACTORIES CO LTD) 27. Dezember 2006 (2006-12-27)
- DATABASE WPI Week 201062 Thomson Scientific, London, GB; AN 2010-M37534 XP002736905, -& CN 101 774 820 A (WEIHUI RONGJIN REFRACTORY CO LTD) 14. Juli 2010 (2010-07-14)
- DATABASE WPI Week 201204 Thomson Scientific, London, GB; AN 2011-P19394 XP002736906, -& CN 102 211 937 A (UNIV QINGHUA) 12. Oktober 2011 (2011-10-12)

## Beschreibung

Die Erfindung betrifft einen Versatz zur Herstellung eines feuerfesten Erzeugnisses, ein Verfahren zur Herstellung eines feuerfesten Erzeugnisses, ein feuerfestes Erzeugnis sowie die Verwendung eines feuerfesten Erzeugnisses.

Der Begriff "feuerfestes Erzeugnis" im Sinne der Erfindung bezeichnet insbesondere feuerfeste keramische Erzeugnisse mit einer Einsatztemperatur von über 600° C und bevorzugt feuerfeste Werkstoffe gemäß DIN 51060, also Werkstoffe mit einem Kegelfallpunkt > SK17. Die Ermittlung des Kegelfallpunktes kann insbesondere gemäß DIN EN 993-12 erfolgen.

Ein Versatz bezeichnet bekanntermaßen eine Zusammensetzung aus einer oder mehreren Komponenten, durch die mittels einer Temperaturbehandlung, also insbesondere mittels eines keramischen Brandes oder mittels Erschmelzen, ein feuerfestes Erzeugnis herstellbar ist.

Die klassischen feuerfesten Werkstoffe zur Herstellung eines feuerfesten Erzeugnisses basieren insbesondere auf den Metalloxiden Al₂O₃, MgO, SiO₂, CaO, Cr₂O₃ und ZrO₂. Zur Herstellung klassischer feuerfester keramischer Werkstoffe werden Versätze aus Komponenten beziehungsweise Rohstoffen erstellt, die insbesondere aus diesen Oxiden bestehende Stoffe umfassen. Grundsätzlich ist es möglich, feuerfeste keramische Werkstoffe mit hervorragenden feuerfesten Eigenschaften auf Basis dieser Oxide herzustellen.

Neueste Entwicklungen tendieren dahin, die Anwendung von feuerfesten Erzeugnissen auf Bereiche auszudehnen, in denen klassische feuerfeste Erzeugnisse aufgrund ihrer feuerfesten Eigenschaften nicht einsetzbar wären. Insoweit sind klassische feuerfeste Erzeugnisse auf Basis von Metalloxiden insbesondere hinsichtlich ihrer Schadenstoleranz sowie ihrer Korrosionsfestigkeit Grenzen unterworfen. Eine Ausdehnung dieser Anwendungsgrenzen ist jedoch möglich, soweit feuerfeste Werkstoffe neben Rohstoffen auf Basis der vorbezeichneten Metalloxide zusätzlich Rohstoffe auf nichtoxidischer Basis aufweisen. Bei solch nichtoxidischen Rohstoffen kann es sich insbesondere um nichtoxidische Rohstoffe in Form von Metallcarbiden, Metallnitriden, Metallboriden, Metalloxicarbiden, Metalloxinitriden und Metalloxicarbonitriden handeln. Durch eine Kombination von Rohstoffen auf oxidischer Basis einerseits sowie auf nichtoxidischer Basis andererseits lassen sich feuerfeste Werkstoffe mit Eigenschaften erstellen, die sie für den Einsatz über den Anwendungsbereich klassischer feuerfester keramischer Werkstoffe auf Basis von Metalloxiden hinaus einsetzbar machen.

Insbesondere lassen sich die Einsatztemperaturen, die Schadenstoleranz sowie die Korrosionsfestigkeit von feuerfesten keramischen Werkstoffen auf Basis einer Kombination von Rohstoffen auf oxidischer und nichtoxidischer Basis erheblich verbessern.

Bei Rohstoffen auf nichtoxidischer Basis handelt es sich in der Regel um synthetische Rohstoffe. Besonders verbreitet sind solch nichtoxidische Rohstoffe auf Basis von Alumina und Kohlenstoff. Zur Herstellung solch nichtoxidischer Rohstoffe auf Basis von Alumina und Kohlenstoff werden Rohstoffe auf Basis von Alumina und Kohlenstoff in der Regel in einem Elektrolichtbogen erschmolzen. Die abgekühlte Schmelze wird anschließend stückig aufbereitet und als Rohstoff für Versätze zur Herstellung von feuerfesten Erzeugnissen zur Verfügung gestellt.

Grundsätzlich hat sich die Herstellung von nichtoxidischen Rohstoffen durch Elektroschmelzverfahren bewährt. Allerdings können bei der Herstellung insbesondere zwei Probleme auftreten, wenn der Kohlenstoffgehalt im Versatz zu hoch eingestellt ist. Zum einen kann es bei der Herstellung des Rohstoffes zur Entstehung von hohen Anteilen der unerwünschten Aluminiumcarbidphase Al₄C₃ kommen. Diese Phase ist jedoch äußerst hydratationsempfindlich, so dass ein feuerfestes Erzeugnis, das nicht unerhebliche Anteile dieser Phase umfasst, ebenfalls hydratationsempfindlich ist. Zum zweiten kann es während des Schmelzvorgangs zur Bildung von Kohlenstoffmonoxid (CO) kommen, was aufgrund der Toxizität dieses Gases insbesondere für das Bedienpersonal im Umfeld des Elektrolichtbogenofens gefährlich sein kann.

EP 2 221 286 A1 beschreibt schmelzgegossene AZS-Erzeugnisse, die neben einem Anteil an Al₂O₃ noch erhebliche Anteile an SiO₂ und ZrO₂ aufweisen. CA 1 129 441 offenbart einen feuerfesten Versatz, umfassend Alumina oder Aluminiumsilikat, Kohlenstoff, Silizium und Chromoxid.

US 4,775,504 A beschreibt feuerfeste Platten auf der Basis von Aluminiumoxid/Kohlenstoff, wobei der Rohstoffversatz Zirkon-Mulit oder Zirkon-Korrund aufweist.

Der Erfindung liegt die Aufgabe zugrunde, einen Versatz zur Verfügung zu stellen, durch welchen ein feuerfestes Erzeugnis, insbesondere ein sogenanntes nichtoxidisches feuerfestes Erzeugnis, herstellbar ist, welches sich durch einen äußerst geringen Anteil an hydratationsempfindlichen Phasen, insbesondere einen niedrigen Anteil an hydratationsempfindlichen Phasen auf Basis Alumina-Kohlenstoff auszeichnet, wie insbesondere Al₄C₃.

Eine weitere Aufgabe der Erfindung besteht darin, einen Versatz zur Herstellung eines feuerfesten Erzeugnisses, insbesondere eines nichtoxidischen feuerfesten Erzeugnisses, zur Verfügung zu stellen, bei dessen Erschmelzen nur ein äußerst geringer Anteil an Kohlenstoffmonoxid entsteht.

Eine weitere Aufgabe der Erfindung besteht darin, ein Verfahren zur Verfügung zu stellen, durch welches ein feuerfestes Erzeugnis, insbesondere ein nichtoxidisches feuerfestes Erzeugnis, mit einem äußerst geringen Anteil an hydratationsempfindlichen Phasen, insbesondere an hydratationsempfindlichen Phasen auf Basis von Alumina-Kohlenstoff herstellbar ist.

Eine weitere Aufgabe der Erfindung besteht darin, ein Verfahren zur Herstellung eines feuerfesten Erzeugnisses, insbesondere eines nichtoxidischen feuerfesten Erzeugnisses, zur Verfügung zu stellen, bei dessen Herstellung nur äußerst geringe Anteile an Kohlenstoffmonoxid entstehen.

Eine weitere Aufgabe der Erfindung besteht darin, ein feuerfestes Erzeugnis, insbesondere ein nichtoxidisches feuerfestes Erzeugnis, zur Verfügung zu stellen, welches einen äußerst geringen Anteil an hydratationsempfindlichen Phasen, insbesondere an hydratationsempfindlichen Phasen auf Basis Alumina-Kohlenstoff aufweist.

Zur Lösung der Aufgabe wird erfindungsgemäß zur Verfügung gestellt ein Versatz zur Herstellung eines feuerfesten Erzeugnisses, umfassend die Komponenten gemäß Anspruch 1.

Überraschend wurde erfindungsgemäß festgestellt, dass durch einen solchen Versatz ein feuerfestes Erzeugnis auf nichtoxidischer Basis herstellbar ist, das nur einen äußerst geringen Anteil an hydratationsempfindlichen Phasen, insbesondere an der hydratationsempfindlichen Phase in Form von Al₄C₃ aufweist.

Ferner wurde überraschend festgestellt, dass beim Erschmelzen eines solchen Versatzes, insbesondere beim Erschmelzen in einem Elektrolichtbogenofen, nur ein äußerst geringer Anteil an Kohlenstoffmonoxid entsteht.

Einen wesentlichen Anteil an diesen vorteilhaften Eigenschaften des erfindungsgemäßen Versatzes hat insbesondere die wenigstens eine silikatische Komponente in Form wenigstens eines Aluminiumsilikates oder wenigstens eines Zirconiumsilikates. Worauf diese vorteilhafte Wirkung dieser Silikate bei der Lösung der erfindungsgemäßen Aufgaben beruht, konnte wissenschaftlich noch nicht im Einzelnen geklärt werden, es gibt aber Hinweise darauf, dass die Anwesenheit von Silizium die Bildung von Al₄C₃ unterdrückt.

Durch den erfindungsgemäßen Versatz ist ein feuerfestes nichtoxidisches Erzeugnis auf Basis Alumina-Kohlenstoff herstellbar. Der Versatz weist daher eine Grundkomponente auf Basis Alumina (Al₂O₃) auf. Die Grundkomponente kann aus einer oder mehreren Komponenten beziehungsweise Rohstoffen auf Basis Alumina bestehen. Indem die Grundkomponente "auf Basis" Alumina aufbaut ist zum Ausdruck gebracht, dass diese eine oder mehrere Komponenten beziehungsweise Rohstoffe umfasst, die jeweils zu wenigstens 50 Masse-%, bezogen auf die jeweilige Komponente, aus Al₂O₃ bestehen. Insoweit kann die Grundkomponente insbesondere aus einer oder mehreren der folgenden Komponenten bestehen: Schmelzkorund, Sinterkorund oder kalzinierte Tonerde. Besonders bevorzugt liegt die Grundkomponente in Form von kalzinierter Tonerde vor. Die Grundkomponente liegt in einem Anteil von wenigstens 50 Masse-% im Versatz vor, also beispielsweise auch in einem Anteil von wenigstens 55, 60, 65, 70, 75, 80, 82, 84, 86, 88, 90, 91, 92, 93, 94 oder 95 Masse-%. Ferner kann die Grundkomponente beispielsweise in einem Anteil von höchstens 99, 98, 97, 96, 95, 94, 93, 92, 91 oder 90 Masse-% im Versatz vorliegen.

Die hierin gemachten Angaben in Masse-% sind jeweils bezogen auf die Gesamtmasse des erfindungsgemäßen Versatzes beziehungsweise erfindungsgemäßen Erzeugnisses, soweit im Einzelfall nichts anderes angegeben ist.

Die wenigstens eine silikatische Komponente kann eine oder mehrere der folgenden Komponenten beziehungsweise Rohstoffe umfassen: wenigstens eine silikatische Komponente auf Basis Aluminiumsilikat oder wenigstens eines silikatische Komponenten auf Basis Zirconiumsilikat, jeweils gemäß Anspruch 1. Nach einer bevorzugten Ausführungsform umfasst die wenigstens eine silikatische Komponente wenigsten eine silikatische Komponente auf Basis Aluminiumsilikat und wenigstens eine silikatische Komponente auf Basis Zirconiumsilikat (mineralogisch Zirkon, ZrSiO₄).

Der Begriff "Aluminiumsilikat" steht hierin ganz allgemein für Silikate auf Basis der Grundoxide Al₂O₃ und SiO₂. Insoweit umfasst der Begriff Aluminiumsilikate sowohl Alumosilikate als auch Aluminiumsilikate. Die silikatische Komponente auf Basis von Aluminiumsilikat liegt in Form einer oder mehrerer der folgenden Komponenten beziehungsweise Rohstoffe auf Basis Aluminiumsilikat vor: Kaolin, Metakaolin, Schamotte, Pyrophillit, kalzinierter Bauxit oder Mullit. Bei Kaolin handelt es sich um einen natürlichen Rohstoff mit dem Hauptbestandteil Kaolinit (Al₄[(OH)₈|Si₄O₁₀]). Bei Phyrophyllit (Al₂[(OH)₂|Si₄O₁₀]) handelt es sich um ein häufig vorkommendes Silikat, dass in der Regel ohne weiteres als natürlicher Rohstoff zur Verfügung gestellt werden kann. Bei Bauxit handelt es sich um Aluminiumerz, das insbesondere verschiedene Aluminiumminerale (insbesondere Gibbsit (γ-Al(OH)₃), Böhmit (γ-AlO(OH)), Diaspor (α-AIO(OH)), Eisenverbindungen (Hämatit (Fe₂O₃) und Goethit (FeO(OH)), Kaolinit und Titanoxid (Anatas (TiO₂)) umfasst. Mullit (3 Al₂O₃ • 2 SiO_{2;} 2 Al₂O₃ • SiO₂) kann insbesondere als synthetischer Mullit, insbesondere in Form wenigstes einer der folgenden Komponenten als Aluminiumsilikat im erfindungsgemäßen Versatz vorliegen: Schmelzmullit oder Sintermullit.

Silikatische Komponenten auf Basis Aluminiumsilikat können beispielsweise in einem Anteil von wenigstens 0,5 Masse-% und beispielsweise in einem Anteil von höchstens 25 Masse-% im Versatz vorliegen, also beispielsweise auch in einem Anteil von wenigstens 1, 2, 3 oder 4 Masse-% und beispielsweise auch in einem Anteil von höchstens 20, 15, 12, 10, 9, 8, 7 oder 6 Masse-%.

Bevorzugt liegt die silikatische Komponente auf Basis von Aluminiumsilikat in Form wenigstens einer der Rohstoffe Schamotte oder Kaolin oder in Form der Rohstoffe Schamotte und Kaolin vor.

Zirconiumsilikat (also ZrSiO₄; Mineralname "Zirkon") kann insbesondere als natürlicher Rohstoff vorliegen.

Zirconiumsilikat kann beispielsweise in Anteilen von wenigstens 1 Masse-% und beispielsweise in Anteilen von höchstens 35 Masse-% im Versatz vorliegen, also beispielsweise auch in einem Anteil von wenigstens 2, 3, 4, 5, 6 oder 7 Masse-% und beispielsweise auch in einem Anteil von höchstens 30, 25, 20, 15, 12, 11, 10 oder 9 Masse-%.

Insgesamt liegen die silikatischen Komponenten in einem Anteil von wenigstens 0,5 Masse-% und beispielsweise in einem Anteil von höchstens 35 Masse-% im Versatz vor, also beispielsweise auch in einem Anteil von wenigstens 1, 2, 3 oder 4 Masse-% und beispielsweise auch in einem Anteil von höchstens 30, 25, 20, 15, 12, 11, 10 oder 9 Masse-%.

Die Kohlenstoffkomponente umfasst einen oder mehrere Kohlenstoffträger, beispielsweise wenigstens einen der folgenden Kohlenstoffträger: Graphit, Ruß oder Petrolkoks. Bevorzugt liegt die Kohlenstoffkomponente in Form von Graphit vor.

Die Kohlenstoffkomponente kann bevorzugt in einem Anteil von wenigstens 0,5 Masse-% und bevorzugt in einem Anteil von höchstens 8,5 Masse-% im Versatz vorliegen, also beispielsweise auch in einem Anteil von wenigstens 1, 2, 3 oder 4 Masse-% und beispielsweise auch in einem Anteil von höchstens 8, 7, 6 oder 5 Masse-%.

Erfindungsgemäß hat sich überraschend herausgestellt, dass der Anteil an Al₄C₃ in einem aus dem erfindungsgemäßen Versatz durch einen Schmelzvorgang hergestellten, feuerfesten Erzeugnis drastisch reduziert werden kann, wenn der Anteil an Kohlenstoff im Versatz derart eingestellt ist, dass der Anteil an Kohlenstoff in dem aus dem Versatz hergestellten Erzeugnis unter 2,4 Masse-% liegt. Erfindungsgemäß hat sich herausgestellt, dass dieses Ziel insbesondere dann erreichbar ist, wenn der Anteil an Kohlenstoff im Versatz insbesondere unter 8,5 Masse-% liegt. Insoweit kann vorgesehen sein, dass der Anteil an Kohlenstoff im Versatz insbesondere unter 8,5 Masse-% liegt, also beispielsweise auch unter 8, 7, 6 oder 5 Masse-%. Ferner kann beispielsweise vorgesehen sein, dass der Anteil an Kohlenstoff im Versatz über 0,45 Masse-% liegt.

Erfindungsgemäß kann vorgesehen sein, dass der Versatz neben der Grundkomponente (insbesondere in Form von kalzinierter Tonerde), der silkatischen Komponente (insbesondere in Form von Kaolin, Metakaolin, Schamotte, Pyrophillit, gebrannter Bauxit und/oder Mullit sowie in Form Zirkon) sowie der Kohlenstoffkomponente (insbesondere in Form von Graphit) weitere Komponenten, nur in einem Anteil unter 2 Masse-% aufweist, also beispielsweise auch in einem Anteil unter 1 Masse-%.

Bevorzugt liegen sämtliche Komponenten des erfindungsgemäßen Versatzes möglichst feinkörnig vor. Bevorzugt liegen sämtliche Komponenten des Versatzes mit einer mittleren Korngröße unter 1 mm vor. Beispielsweise kann vorgesehen sein, dass wenigstens 90 Masse-% der Komponenten des Versatzes, also beispielsweise auch 100 Masse-% der Komponenten des Versatzes in einer Körnung unter 1 mm, unter 0,8 mm, unter 0,6 mm oder auch unter 0,5 mm vorliegen.

Wie die meisten Versätze zur Herstellung von nichtoxidkeramischen Werkstoffen, kann auch der erfindungsgemäße Versatz äußerst sensibel auf bestimmte Komponenten reagieren. Insofern kann erfindungsgemäß vorgesehen sein, die Komponenten des Versatzes genau aufeinander abzustimmen, so dass der Versatz bestimmte Stoffe beziehungsweise Oxide nicht über ein bestimmtes Maß hinaus aufweist. Insbesondere kann vorgesehen sein, dass der Versatz die folgenden Oxide in den folgenden Anteilen aufweist, wobei die jeweiligen Anteile einzeln oder in beliebiger Kombination im Versatz vorliegen können:
- Al₂O₃:: wenigstens 60, 65, 70, 73, 76, 78, 80, 82, 84, 85, 86, 87, 88 oder 89 Masse-%, höchstens 98, 97, 96, 95, 94, 93 oder 92 Masse-%;
- SiO₂:: wenigstens 0,5 oder 1 oder 1,5 oder 2 oder 2,5 Masse-%, höchstens 12, 11, 10, 9, 8, 7, 6, 5, 4 oder 3 Masse-%;
- ZrO₂:: wenigstens 0,05 oder 0,1 oder 0,5 oder 1, 2, 3 oder 4 Masse-%, höchstens 25, 22, 20, 18, 16, 14, 12, 10, 9, 8, 7, 6 oder 5 Masse-%;
- TiO₂:: unter 2 oder 1 oder 0,5 Masse-%;
- Fe₂O₃:: unter 2 oder 1 oder 0,5 Masse-%;
- Na₂O+Li₂O+K₂O:: unter 2 oder 1 oder 0,5 Masse-%.

Zur Herstellung eines feuerfesten Erzeugnisses aus dem erfindungsgemäßen Versatz wird dieser einer Temperaturbehandlung unterworfen, insbesondere erschmölzen. Nach Abkühlung einer solchen, aus dem erfindungsgemäßen Versatz gebildeten Schmelze erhält man ein feuerfestes Erzeugnis.

Gegenstand der Erfindung ist auch ein Verfahren zur Herstellung eines feuerfesten Erzeugnisses, umfassend die folgenden Schritte:
Zur Verfügungstellung eines erfindungsgemäßen Versatzes;
Erschmelzen des Versatzes;
Abkühlen der Schmelze.

Das Erschmelzen des Versatzes durch Temperaturbehandlung geschieht insbesondere derart, dass der Versatz eine Schmelze ausbildet. Das Erschmelzen des Versatzes kann insbesondere in einem elektrischen Lichtbogenofen erfolgen. Insbesondere kann das Erschmelzen des Versatzes bei Temperaturen über 2.000°C erfolgen.

Bevorzugt kann das Erschmelzen des Versatzes in reduzierender Atmosphäre erfolgen. In Abhängigkeit der für den Schmelzvorgang gewählten Verfahrensparameter und/oder der Versatzkomponenten kann sich eine solch reduzierende Atmosphäre beim Erschmelzen des erfindungsgemäßen Versatzes von selbst einstellen.

Nach dem anschließenden Abkühlen und Erstarren der Schmelze erhält man ein feuerfestes Erzeugnis, insbesondere in Form eines nichtoxidischen feuerfesten Erzeugnisses, beispielsweise auch eines feuerfesten Erzeugnisses in Form einer erstarrten Schmelze.

Gegenstand der Erfindung ist auch ein Erzeugnis, welches insbesondere durch ein erfindungsgemäßes Verfahren hergestellt ist, insbesondere ein feuerfestes Erzeugnis in Form einer erstarrten Schmelze.

Beispielsweise kann der erfindungsgemäße Versatz in einem Schmelztiegel durch einen Elektrolichtbogenofen erschmolzen werden und anschließend dort abkühlen und erstarren, so dass ein feuerfestes Erzeugnis in Form einer erstarrten Schmelze erhalten wird.

Ein erfindungsgemäßes Erzeugnis zeichnet sich durch charakteristische Phasen und Eigenschaften aus.

So kann das erfindungsgemäße Erzeugnis insbesondere eine sehr hohe Dichte aufweisen, insbesondere eine Dichte von über 3,3 g/cm³, also beispielsweise auch eine Dichte im Bereich von 3,3 bis 3,9 g/cm³, also beispielsweise auch eine Dichte von wenigstens 3,4 oder 3,5 oder 3,55 oder 3,6 g/cm³ und beispielsweise auch eine Dichte von höchstens 3,85 oder 3,8 oder 3,75 oder 3,70 g/cm³. Besonders bevorzugt beträgt die Dichte etwa 3,62 g/cm³.

Das erfindungsgemäße Erzeugnis kann bevorzugt eine verhältnismäßig geringe offene Porosität aufweisen, beispielsweise offene Porosität von unter 8 Volumen-%, also beispielsweise auch eine offene Porosität im Bereich von 2 bis 8 Volumen-%, also beispielsweise auch offene Porosität von höchstens 7, 6 oder 5 Volumen-% und beispielsweise auch offene Porosität von wenigstens 3 oder 3,5 oder 4 oder 4,5 Volumen-%. Besonders bevorzugt beträgt die offene Porosität etwa 4,85 Volumen-%.

Die hierin gemachten Angaben zur Dichte sind bestimmt gemäß British Standard BS 1902-3.16:1990 bei einem Quecksilberdruck bei den Messungen von 0,52 psia (pound-force per square inch).

Die hierin gemachten Angaben zur offenen Porosität sind bestimmt gemäß British Standard BS 1902-3.16:1990 bei einem Quecksilberdruck bei den Messungen von 0,52 psia sowie 33.000 psia (Anmerkung: Zur Bestimmung der offenen Porosität gemäß British Standard BS 1902-3.16:1990 werden Messungen bei zwei verschiedenen Drücken benötigt).

Ferner kann das erfindungsgemäße Erzeugnis einen geringen Anteil an Kohlenstoff aufweisen, insbesondere einen Kohlenstoffanteil unter 2,4 Masse-%, also insbesondere auch einen Kohlenstoffanteil unter 2,2 oder 2,0 oder 1,8 oder 1,6 oder 1,4 oder 1,2 oder 1,0 Masse-% oder auch unter 0,9 Masse-%. Ferner kann der Anteil an Kohlenstoff in dem erfindungsgemäßen Erzeugnis bei wenigstens 0,1 oder 0,2 oder 0,3 oder 0,4 oder 0,5 oder 0,6 oder 0,7 oder 0,8 Masse-% liegen.

Die hierin gemachten Angaben zum Anteil an Kohlenstoff im Erzeugnis sind bestimmt gemäß DIN EN ISO 21068-2:2008-12.

Charakteristisch für das erfindungsgemäße Erzeugnis ist insbesondere auch, dass dieses Einschlüsse von Metallen und Metalllegierungen aufweisen kann. Bei diesen Metallen kann es sich insbesondere um Metalle in Form von metallischem Aluminium und Silizium handeln, da das Element Aluminium in der Grundkomponente und das Element Silizium in der silikatischen Komponente des Versatzes vorliegt. Bei den Metalllegierungen kann es sich insbesondere um solche handeln, die wenigstens eines der Metalle Aluminium und Silizium umfassen und gegebenenfalls eines oder mehrere weitere Metalle umfassen, die als Elemente in den Komponenten des Versatzes vorhanden sind, beispielsweise Titan (Ti) oder Eisen (Fe) als natürliche Verunreinigungen in Bauxit. Insofern können charakteristische Einschlüsse in dem erfindungsgemäßen Erzeugnis metallisches Aluminium und metallisches Silizium sowie gegebenenfalls eine oder mehrere Legierungen auf Basis der Metalle Aluminium und Silizium sowie wenigstens einem der Metalle Titan und Eisen sein, beispielsweise wenigstens eine der folgenden Legierungen: AlSi, AlSiFe, AlSiTi oder AlSiTiFe.

Einschlüsse aus metallischem Aluminium oder Silizium oder den vorbezeichneten Metalllegierungen können im erfindungsgemäßen Erzeugnis beispielsweise in Anteilen bis 2 Masse-% vorliegen.

Charakteristisch an diesen Einschlüssen von metallischem Aluminium und Silizium sowie den Metalllegierungen ist insbesondere auch, dass diese in das erfindungsgemäße Erzeugnis eingebettet sind, insbesondere, sofern das erfindungsgemäße Erzeugnis in Form einer erstarrten Schmelze vorliegt. Insbesondere, sofern das erfindungsgemäße Erzeugnis in Form einer erstarrten Schmelze vorliegt, weist das erfindungsgemäße Erzeugnis eine hohe Dichte und eine nur geringe Porosität auf, so dass die Einschlüsse dieser Metalle und Metalllegierungen von der umgebenen Atmosphäre abgeschirmt sind. Insbesondere auch aufgrund dieses Umstandes erweist sich das erfindungsgemäße Erzeugnis als hervorragender Rohstoff für einen Versatz zur Herstellung eines kohlenstoffgebundenen feuerfesten Erzeugnisses, insbesondere zur Herstellung eines kohlenstoffgebundenen Erzeugnisses in Form eines Alumina-Kohlenstoff-Erzeugnisses (insbesondere eines Al₂O₃-C-Steines) oder eines Magnesia-Kohlenstoff-Erzeugnisses (insbesondere eines MgO-C-Steines). Denn die metallischen Einschlüsse und Metalllegierungen bleiben auch bei hohen Anwendungstemperaturen stabil, da sie kaum in Kontakt mit der umgebenden Atmosphäre treten. Erst wenn das feuerfeste Erzeugnis verschleißt oder wenn Risse entstehen, treten die metallischen Einschlüsse und Metalllegierungen an die Oberfläche und wirken als Antioxidantien. Außerdem können entstandene Risse durch die metallischen Einschlüsse und Metalllegierungen geschlossen werden, indem diese bei Inkontakttreten mit der Atmosphäre unter Volumenzunahme oxidieren und die entstandenen Risse hierdurch schließen. Das feuerfeste Erzeugnis kann insoweit selbstheilend auf Verschleiß und Schädigungen reagieren. Insofern müssen einem Versatz zur Herstellung eines solchen kohlenstoffgebundenen feuerfesten Erzeugnisses neben einem Rohstoff aus dem erfindungsgemäßen Erzeugnis keine weiteren Antioxidantien zugegeben werden.

Neben den vorbezeichneten Phasen können in dem erfindungsgemäßen Erzeugnis insbesondere noch eine oder mehrere der folgenden Phasen vorliegen: Metallcarbide, Metalloxicarbide, Metalloxicarbonitride, Metalloxinitride oder Metallnitride. Bei diesen Phasen kann es sich beispielsweise um eines oder mehrere der folgenden Phasen handeln: SiC, Al₄O₄C, SiAlON, SiCAlON oder Al-Oxinitrid.

Insofern kann ein erfindungsgemäßes Erzeugnis die folgenden Phasen in den folgenden Massenanteilen, jeweils einzeln oder in Kombination, aufweisen:

| | |
|---|---|
| Korund (Al₂O₃): | wenigstens 64, 68, 70,72, 74, 76, 78, 80, 82, 84, 86, 88, 90, 91 oder 92 Masse-%, höchstens 99,5 oder 99, 98, 97, 96 oder 95 Masse-%; |
| | |
| Gesamtmasse der Phasen Al₄O₄C, SiC, SiAlON, SiCAlON, Al-Oxinitrid: | |
| | wenigstens 0,5 oder 1 oder 1,5 oder 2 oder 2,5 oder 3 oder 3,5 Masse-%, höchstens 36, 33, 35, 30, 25, 20, 18, 16, 14, 12, 10, 9, 8, 7, 6, 5 oder 4 Masse-%; |
| | |
| Gesamtmasse aus metallischem Al und Si sowie den Metalllegierungen AlSi, AlSiFe, AlSiTi, AlSiTiFe: | |
| | höchstens 2 oder 1,5 oder 1 Masse-%; beispielsweise auch wenigstens 0,1 oder 0,5 Masse-%. |
| | |
| Al₄C₃: | höchstens 2 oder 1,5 oder 1 oder 0,5 Masse-%. |

Die Gesamtmasse der Phasen Al₄O₄C, SiC, SiAlON, SiCAlON, Al-Oxinitrid kann weitgehend oder zu erheblichen Teilen bestimmt sein durch den Massenanteil an Al₄O₄C, wobei der Massenanteil an Al₄O₄C an der Gesamtmasse der Phasen Al₄O₄C, SiC, SiAlON, SiCAlON, Al-Oxinitrid beispielsweise im Bereich von 0 bis 100 Masse-% liegen kann, bezogen auf die Gesamtmasse der Phasen Al₄O₄C, SiC, SiAlON, SiCAlON, Al-Oxinitrid. Wie unten weiter ausgeführt, kann ein Anteil der übrigen nichtoxidischen Phasen, insbesondere der Phasen SiC, SiAlON und SiCAlON, im Erzeugnis vorteilhaft sein, so dass der Massenanteil an Al₄O₄C an der Gesamtmasse der Phasen Al₄O₄C, SiC, SiAlON, SiCAlON, Al-Oxinitrid, bezogen auf die Gesamtmasse der Phasen Al₄O₄C, SiC, SiAlON, SiCAlON und Al-Oxinitrid, beispielsweise auch bei höchstens 90, 80, 70 oder 60 Masse-% und beispielsweise auch bei wenigstens 10, 20, 30 oder 40 Masse-% liegen kann. Insoweit kann im erfindungsgemäßen Erzeugnis beispielsweise die Gesamtmasse an Al₄O₄C betragen: wenigstens 0,25 oder 0,5 oder 1 oder 1,5 oder 2 oder 2,5 oder 3 oder 3,5 Masse-%, höchstens 36, 33, 30, 27, 25, 20, 18, 16, 14, 12, 10, 9, 8, 7, 6, 5 oder 4 Masse-%.

Ferner kann im erfindungsgemäßen Erzeugnis die Gesamtmasse an SiC, SiAlON und SiCAlON betragen: wenigstens 0,25 oder 0,5 oder 1 oder 1,5 oder 2 oder 2,5 oder 3 oder 3,5 Masse-%, höchstens 30, 25, 20, 18, 16, 14, 12, 10, 9, 8, 7, 6, 5 oder 4 Masse-%.

Neben den vorbezeichneten Phasen kann das erfindungsgemäße Erzeugnis weitere Phasen insbesondere in einem Anteil von höchstens 2 oder 1,5 oder 1 Masse-% aufweisen.

Erfindungsgemäß wurde festgestellt, dass die Begrenzung des Anteils an Al₄O₄C im erfindungsgemäßen Erzeugnis auf die vorgenannten Anteile mit erheblichen Vorteilen für das Erzeugnis einhergeht. So wurde festgestellt, dass Al₄O₄C bei hinreichend hohen Temperaturen und bei hinreichend hohem Anteil an Sauerstoff zu Al₂O₃ reagieren kann, welches gegenüber Al₄O₄C jedoch ein um etwa 25,9 % geringeres Volumen einnimmt, was zu einer Steigerung der Porosität des Erzeugnisses führen kann. Eine Steigerung der Porosität kann jedoch zu einer höheren Schlackeninfiltration des Erzeugnisses und damit zu einer schlechteren Korrosionsfestigkeit des Erzeugnisses führen. Erfindungsgemäß wurde nunmehr festegestellt, dass die Begrenzung des Anteils an Al₄O₄C im Erzeugnis auf die vorgenannten Anteile zu keiner wesentlichen Verschlechterung der Korrosionsfestigkeit des Erzeugnisses führt und die vorgenannten Aufgaben der Erfindung gleichzeitig durch die Erfindung gelöst werden können.

Ferner wurde erfindungsgemäß festgestellt, dass die Begrenzung des Anteils an Al₄O₄C im erfindungsgemäßen Erzeugnis dazu führt, dass die im Erzeugnis vorliegenden Al₄O₄C-Kristalle im wesentlichen gleichmäßig, insbesondere in Form von Inseln über das Volumen des Erzeugnisses verteilt sind. Mit anderen Worten: Das erfindungsgemäße Erzeugnis kann sich insbesondere durch isotrop, insbesondere in Form von Inseln über das Volumen des Erzeugnisses verteilte Al₄O₄C-Kristalle auszeichnen. Insbesondere wurde festegestellt, dass die Al₄O₄C-Kristalle im erfindungsgemäßen Erzeugnis vorwiegend im Bereich der Korngrenzen der Körner aus Al₂O₃ vorliegen. Bei Versuchen wurde festgestellt, dass sich die Al₄O₄C-Kristalle bei Anteilen an Al₄O₄C im Erzeugnis, die über den erfindungsgemäßen Anteilen liegen, vorwiegend schichtartig anordnen, also insbesondere anisotrop über das Erzeugnis verteilen. Dies hat jedoch den Nachteil, dass eine solche Schicht aus Al₄O₄C-Kristallen an der Außenseite des Erzeugnisses zu liegen kommen kann und damit in Kontakt mit Sauerstoff treten kann, was unter dem Gesichtspunkt der Oxidationsresistenz nachteilig ist. Ferner kann es zwischen solch schichtartig vorliegenden Al₄O₄C-Kristallen einerseits und Al₂O₃ andererseits aufgrund der unterschiedlichen Wärmeausdehnungskoeffizienten dieser Stoffe zu erheblichen thermischen Spannungen kommen, die bei einer isotropen Verteilung der Al₄O₄C-Kristalle jedoch wesentlich besser abgebaut werden können.

Ferner wurde erfindungsgemäß festgestellt, dass die nichtoxidischen, siliciumhaltigen Phasen SiC, SiAlON und SiCAlON im erfindungsgemäßen Erzeugnis in den vorgenannten Anteilen mit erheblichen Vorteilen für das Erzeugnis einhergehen. So wurde festgestellt, dass diese Phasen bei hinreichend hohen Temperaturen und bei hinreichend hohem Anteil an Sauerstoff unter anderem zu SiO₂ reagieren. Die Anwesenheit eines gewissen Anteils an SiO₂ im Erzeugnis kann jedoch wiederum zur Ausbildung von niedrig schmelzenden Phasen führen, die einer Porositätssteigerung entgegenwirken können. Gleichzeitig können die Heißfestigkeitseigenschaften des Erzeugnisses jedoch verschlechtert werden. Erfindungsgemäß wurde nunmehr festegestellt, dass die Begrenzung des Anteils an SiC, SiAlON und SiCAlON im Erzeugnis auf die vorgenannten Anteile zu keiner wesentlichen Verschlechterung der Heißfestigkeitseigenschaften des Erzeugnisses führt, die Korrosionsfestigkeit des Erzeugnisses jedoch weiter verbessern können.

Die im erfindungsgemäßen Erzeugnis vorliegenden Kristalle der Phasen Al₂O₃, Al₄O₄C, SiC und SiCAlON können insbesondere die folgende durchschnittliche Größe aufweisen, wobei die jeweiligen Kristalle insbesondere zu wenigstens 90 Masse-%, also beispielsweise auch zu wenigstens 95 oder 100 Masse-%, bezogen auf den Anteil der jeweiligen Kristalle aus einer der vorgenannten Phasen in Bezug auf die Gesamtmasse dieser Phase im Erzeugnis, in dieser Größe vorliegen können:
- Al₂O₃:: unter 500 µm, also beispielsweise auch unter 400, 300 oder unter 200 µm;
- Al₄O₄C:: unter 100 µm, also beispielsweise auch unter 80, 60, 40 oder unter 20 µm;
- SiC:: unter 20 µm, also beispielsweise auch unter 15, 10 oder unter 5 µm;
- SiCAlON:: unter 20 µm, also beispielsweise auch unter 15, 10 oder unter 5 µm.

Berechnet in jeweils oxidischer Form, kann das Erzeugnis die folgenden Oxide in den jeweils folgenden Massenanteilen umfassen, wobei die Oxide jeweils einzeln oder in Kombination in den jeweiligen Massenanteilen im Erzeugnis vorliegen können:
- Al₂O₃:: wenigstens 64, 68, 70,72, 74, 76, 78, 80, 82, 84, 86, 88, 90, 91 oder 92 Masse-%, höchstens 99,5 oder 99, 98, 97, 96 oder 95 Masse-%;
- SiO₂:: wenigstens 0,5 oder 1 oder 1,5 oder 2 oder 2,5 Masse-%, höchstens 15, 14, 13, 12, 11, 10, 9, 8, 7, 6, 5, 4 oder 3 Masse-%;
- ZrO₂:: höchstens 30, 25, 22, 20, 18, 16, 14, 12, 10, 9, 8, 7, 6 oder 5 Masse-%; beispielsweise auch wenigstens 0,05 oder 0,1 oder 0,5 oder 1, 2, 3 oder 4 Masse-%,
- TiO₂:: unter 2 oder 1 oder 0,5 Masse-%;
- Fe₂O₃:: unter 2 oder 1 oder 0,5 Masse-%;

Wie bereits ausgeführt, eignet sich das erfindungsgemäße Erzeugnis hervorragend als Rohstoff zur Herstellung eines feuerfesten Erzeugnisses, insbesondere eines kohlenstoffgebundenen Erzeugnisses. Gegenstand der Erfindung ist damit auch die Verwendung eines erfindungsgemäßen feuerfesten Erzeugnisses als Rohstoff zur Herstellung eines feuerfesten Erzeugnisses, insbesondere eines kohlenstoffgebundenen Erzeugnisses, insbesondere eines feuerfesten Alumina-Kohlenstoff- oder Magnesia-Kohlenstoff-Erzeugnisses.

Die Verwendung des erfindungsgemäßen feuerfesten Erzeugnisses kann dabei mit der Maßgabe erfolgen, dass das erfindungsgemäße Erzeugnis, insbesondere in Form einer erstarrten Schmelze, zerkleinert, insbesondere zu einem körnigen Gut zerkleinert wird und anschließend als Rohstoff zur Herstellung eines solchen feuerfesten kohlenstoffgebundenen Erzeugnisses zur Verfügung gestellt wird.

Weitere Merkmale der Erfindung ergeben sich aus den Ansprüchen sowie dem nachfolgenden Ausführungsbeispiel der Erfindung.

Sämtliche Merkmale der Erfindung können, einzeln oder in Kombination beliebig miteinander kombiniert sein.

Im Ausführungsbeispiel wird eine beispielhafte Ausführung eines erfindungsgemäßen Versatzes näher beschrieben.

Zunächst wurde ein Versatz zur Verfügung gestellt, der die folgenden Komponenten in den folgenden Massenanteilen aufwies:

| | |
|---|---|
| Kalzinierte Tonerde: | 90 Masse-%; |
| Graphit: | 5 Masse-%; |
| Kaolin: | 5 Masse-%. |

Die kalzinierte Tonerde, die im Ausführungsbeispiel die Grundkomponente auf Basis Alumina darstellt, liegt in großer Reinheit mit einem Anteil an Al₂O₃ von 99,4 Masse-%, bezogen auf die Masse der kalzinierten Tonerde, vor. Der d₉₀-Wert der Korngröße betrug 95µm.

Graphit stellt im Ausführungsbeispiel die Kohlenstoffkomponente dar. Der Anteil an Kohlenstoff betrug 94,61 Masse-%, bezogen auf die Masse des Graphits. Der d₉₀-Wert der Korngröße betrug 500µm.

Schließlich stellte Kaolin im Ausführungsbeispiel die silikatische Komponente auf Basis Aluminiumsilikat dar, wobei der Gesamtanteil an Al₂O₃ und SiO₂ 97,6 Masse-%, bezogen auf die Masse des Kaolins, betrug. Der d₉₀-Wert der Korngröße betrug 17,6µm.

Die chemische Zusammensetzung des Versatzes war wie folgt:

| | |
|---|---|
| Al₂O₃: | 91,66 Masse-%; |
| C: | 4,73 Masse-%; |
| SiO₂: | 2,96 Masse-%; |
| Alkalioxide: | 0,24 Masse-%; |
| TiO₂: | 0,03 Masse-%; |
| Fe₂O₃: | 0,13 Masse-%; |
| Sonstige: | 0,25 Masse-%. |

Die Versatzkomponenten wurden gemischt und in einem Tiegel in einem Elektrolichtbogenofen bei einer Temperatur über 2.000°C für eine Dauer von etwa 5 Stunden erschmolzen.

Anschließend ließ man die Schmelze im Tiegel abkühlen und erstarren, worauf man ein feuerfestes Erzeugnis in Form einer erstarrten Schmelze erhielt.

Das Erzeugnis wies die folgenden Phasen in den folgenden Anteilen auf:

| | |
|---|---|
| Korund (Al₂O₃): | 95 Masse-%; |
| Al₄O₄C: | 2 Masse-%; |
| SiC+SiCAlON: | 1,8 Masse-%; |
| weitere Phasen: | 1,2 Masse-%. |

Der Anteil an Kohlenstoff im Erzeugnis betrug 0,78 Masse-%.

Die Dichte des Erzeugnisses betrug 3,62 g/cm3.

Die offene Porosität des Erzeugnisses betrug 4,85 Volumen-%.

Die Dichte wurde bestimmt gemäß British Standard BS 1902-3.16:1990 bei einem Quecksilberdruck bei den Messungen von 0,52 psia. Die offene Porosität wurde bestimmt gemäß British Standard BS 1902-3.16:1990 bei einem Quecksilberdruck bei den Messungen von 0,52 psia sowie 33.000 psia. Der Anteil an Kohlenstoff im Erzeugnis wurde bestimmt gemäß DIN EN ISO 21068-2:2008-12.

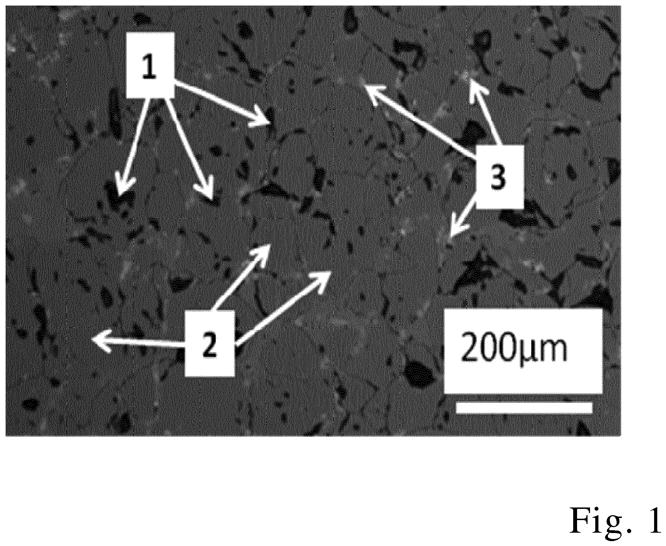

Von diesem Erzeugnis wurden polierte Anschliffe präpariert und elektronenmikroskopisch vergrößerte Abbildungen von Ansichten auf diese Proben erstellt, die in den Figuren 1 bis 3 dargestellt sind.

In Figur 1 entspricht der weiße Balken rechts unten im Bild einer Länge von 200 µm. Die mit dem Bezugszeichen 1 gekennzeichnete Phase entspricht Al₂O₃. Mit dem Bezugszeichen 2 sind nichtoxidische Phasen in Form von insbesondere SiC, Al₄O₄C, SiAlON, SiCAlON und Al-Oxinitrid angegeben. Deutlich zu erkennen ist die isotrope Verteilung der nichtoxidische Phasen. Schließlich sind mit dem Bezugszeichen 3 Poren im Gefüge des Erzeugnisses gekennzeichnet.

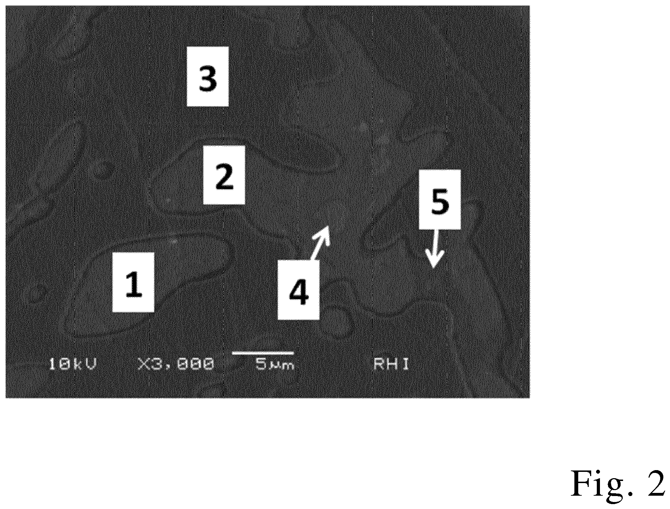

In der Abbildung gemäß Figur 2 entspricht der weiße Balken unten in der Bildmitte einer Länge von 5 µm. Mit dem Bezug 1 wird die Hauptphase in Form von Korund gekennzeichnet. Die mit den Bezugszeichen 4, 5 und 6 gekennzeichneten Phasen sind jeweils nichtoxidische Phasen. Dabei ist mit dem Bezugszeichen 4 jeweils eine Phase in Form von SiCAlON, mit dem Bezugszeichen 5 eine Phase in Form von SiC und mit dem Bezugszeichen 6 eine nichtoxidische Mischphase gekennzeichnet.

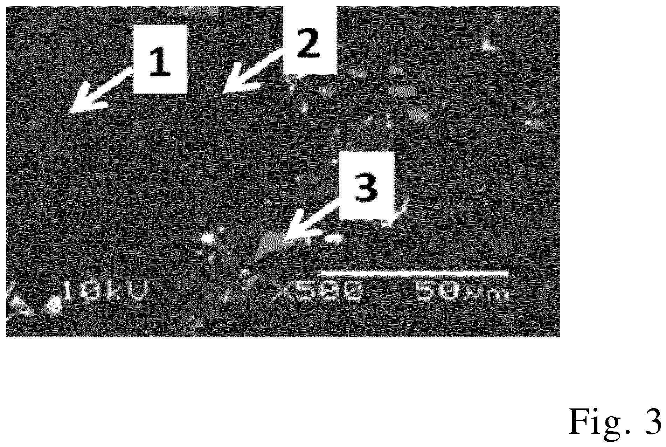

In der Abbildung gemäß Figur 3 entspricht der weiße Balken rechts unten im Bild einer Länge von 50 µm. Mit dem Bezug 1 wird die Hauptphase in Form von Korund gekennzeichnet, während mit dem Bezugszeichen 4 wiederum eine nichtoxidische Phase in Form von SiCAlON und mit dem Bezugszeichen 7 eine Phase in Form von metallischem Silicium gekennzeichnet ist.

## Patentansprüche

1. Versatz zur Herstellung eines feuerfesten Erzeugnisses, umfassend die folgenden Komponenten:
1.1 wenigstens 50 Masse-% einer Grundkomponente auf Basis Alumina in Form einer oder mehrerer der folgenden Komponenten: Schmelzkorund, Sinterkorund oder kalzinierte Tonerde;
1.2 wenigstens 0,5 Masse-% wenigstens einer der folgenden silikatischen Komponenten: Kaolin, Metakaolin, Schamotte, Pyrophillit, kalzinierter Bauxit, Mullit oder Zirkon;
1.3 eine Kohlenstoffkomponente.

2. Versatz nach Anspruch 1 mit einer Kohlenstoffkomponente in Form von Graphit.

3. Verfahren zur Herstellung eines feuerfesten Erzeugnisses, umfassend die folgenden Schritte:
3.1 Zur Verfügungstellung eines Versatzes, umfassend die folgenden Komponenten:
3.1.1 wenigstens 50 Masse-% einer Grundkomponente auf Basis Alumina in Form einer oder mehrerer der folgenden Komponenten: Schmelzkorund, Sinterkorund oder kalzinierte Tonerde;
3.1.2 wenigstens 0,5 Masse-% wenigstens einer der folgenden silikatischen Komponenten: wenigstens eine silikatische Komponente auf Basis Aluminiumsilikat oder wenigstens eine silikatische Komponente auf Basis Zirconiumsilikat;
3.1.3 eine Kohlenstoffkomponente;
3.2 Erschmelzen des Versatzes;
3.3 Abkühlen der Schmelze.

4. Feuerfestes Erzeugnis, umfassend die folgenden Phasen in den folgenden Anteilen:
4.1 Korund: 64 bis 99,5 Masse-%; und
4.2 Gesamtmasse von SiC, Al₄O₄C, SiAlON, SiCAlON, Al-Oxinitrid: 0,5 bis 36 Masse-%.

5. Feuerfestes Erzeugnis nach Anspruch 4 mit einem Anteil an Kohlenstoff im Erzeugnis unter 2,4 Masse-%.

6. Feuerfestes Erzeugnis nach wenigstens einem der Ansprüche 4 oder 5 in Form einer erstarrten Schmelze.

7. Verwendung eines feuerfesten Erzeugnisses nach wenigstens einem der Ansprüche 4 bis 6 als Rohstoff zur Herstellung eines feuerfesten Erzeugnisses.

## Claims

1. A batch for the production of a refractory product, comprising the following components:
1.1 at least 50 % by weight of a base component based on alumina in the form of one or more of the following components: fused corundum, sintered corundum or calcined alumina;
1.2 at least 0.5 % by weight of at least one of the following silicate components: kaolin, metakaolin, fireclay, pyrophyllite, calcined bauxite, mullite or zircon;
1.3 a carbon component.

2. The batch as claimed in claim 1 with a carbon component in the form of graphite.

3. A process for the production of a refractory product, comprising the following steps:
3.1 Providing a batch, comprising the following components:
3.1.1 at least 50 % by weight of a base component based on alumina in the form of one or more of the following components: fused corundum, sintered corundum or calcined alumina;
3.1.2 at least 0.5 % by weight of at least one of the following silicate components: at least one silicate component based on aluminium silicate or at least one silicate component based on zirconium silicate;
3.1.3 a carbon component.
3.2 melting the batch;
3.3 cooling the melt.

4. A refractory product, comprising the following phases in the following proportions:
4.1 corundum: 64% to 99.5% by weight; and
4.2 total weight of SiC, Al₄O₄C, SiAlON, SiCAlON, Al oxynitride: 0.5% to 36% by weight.

5. The refractory product as claimed in claim 4, with a proportion of carbon in the product of less than 2.4% by weight.

6. The refractory product as claimed in at least one of claims 4 or 5, in the form of a solidified melt.

7. Use of a refractory product as claimed in at least one of claims 4 to 6, as a raw material for the production of a refractory product.

## Revendications

1. Mélange pour la fabrication d'un produit réfractaire, comprenant les composants suivants :
1.1 au moins 50 % en masse d'un composant de base à base d'alumine sous la forme d'un ou plusieurs des composants suivants : corindon fondu, corindon fritté ou alumine calcinée ;
1.2 au moins 0,5% en masse d'au moins un des composants silicatés suivants: caolin, métacaolin, chamotte, pyrophyllite, bauxite calcinée, mullite ou zircon ;
1.3 un composant au carbone.

2. Mélange selon la revendication 1 avec un composant au carbone sous la forme de graphite.

3. Procédé pour la fabrication d'un produit réfractaire, comprenant les étapes suivantes :
3.1 pour la mise à disposition d'un mélange comprenant les composants suivants :
3.1.1 au moins 50% en masse d'un composant de base à base d'alumine sous la forme d'un ou plusieurs des composants suivants : corindon fondu, corindon fritté ou alumine calcinée ;
3.1.2 au moins 0,5 % en masse d'au moins un des composants silicatés suivants : au moins un composant silicaté à base de silicate d'aluminium ou au moins un composant silicique à base de silicate de zirconium ;
3.1.3 un composant au carbone ;
3.2 fusion du mélange ;
3.3 refroidissement de la masse en fusion.

4. Produit réfractaire, comprenant les phases suivantes dans les proportions suivantes :
4.1 Corindon : 64 à 99,5 % en masse ; et
4.2 masse totale de SiC, Al₄O₄C, SiAlON, SiCAION, oxynitrure d'aluminium : 0,5 à 36 % en masse.

5. Produit réfractaire selon la revendication 4 avec une proportion de carbone dans le produit inférieure à 2,4 % en masse.

6. Produit réfractaire selon au moins l'une quelconque des revendications 4 ou 5 sous la forme d'une masse en fusion solidifiée.

7. Utilisation d'un produit réfractaire selon au moins l'une quelconque des revendications 4 à 6 en tant que matière première destinée à la fabrication d'un produit réfractaire.
